# EUROPÄISCHE PATENTSCHRIFT

(11) **EP 2 901 131 B1**
(45) Veröffentlichungstag und Bekanntmachung des Hinweises auf die Patenterteilung: **04.05.2016**
(21) Anmeldenummer: 13762825.1
(22) Anmeldetag: 16.09.2013
(51) Int. Cl.: G01N 1/44, F27B 14/02, F27B 14/08, F27B 17/02, G01N 1/38, G01N 23/22, F27D 5/00

(54) **ANORDNUNG UND VERFAHREN ZUR HERSTELLUNG VON ANALYSEPROBEN**
ARRANGEMENT AND METHOD FOR PRODUCING ANALYSIS SAMPLES
DISPOSITIF ET PROCÉDÉ POUR LA PRODUCTION D'ÉCHANTILLONS POUR ANALYSE

(30) Priorität: 28.09.2012 DE 102012109248
(43) Veröffentlichungstag der Anmeldung: 05.08.2015
(73) Patentinhaber: Fluxana GmbH & Co. Kg, 47551 Bedburg-Hau (DE)
(72) Erfinder: SCHRAMM, Rainer, 47551 Bedburg-Hau (DE)
(74) Vertreter: Habbel, Ludwig
(86) Internationale Anmeldenummer: PCT/EP2013/069099
(87) Internationale Veröffentlichungsnummer: WO 2014/048780

(56) Entgegenhaltungen:
- EP-A1- 0 775 906
- EP-A1- 2 270 410
- EP-A2- 0 501 835

## Beschreibung

Die Erfindung betrifft eine Anordnung nach dem Oberbegriff des Anspruchs 1 sowie ein Verfahren zum Herstellen von Analyseproben einer Röntgenfluoreszenzanalyse.

Bei der Röntgenftuoreszenzanatyse wird das zu analysierende Material zunächst aufgeschmolzen. Die Schmelztemperaturen können beispielsweise bei Temperaturen zwischen 900°C und 1.400°C liegen, so dass die eingesetzten Gerätschaften einer erheblichen Temperaturbelastung ausgesetzt werden. Die verwendeten Schmelztiegel weisen jeweils eine Höhe von wenigen Zentimetern auf, beispielsweise etwa 3 bis 5 cm, und auch einen ähnlich großen Durchmesser, so dass die Menge des aufzuschmelzenden Materials im Bereich von einigen Gramm und höchstens einigen Kubikzentimetern liegt. Die Tiegel können daher auch als Analyseprobentiegel bezeichnet werden. Trotz der erheblichen Unterschiede zu Tiegeln, wie sie in Stahlwerken, Gießereien und dergleichen Produktionsstätten verwendete werden, wird auch für die im Labor verwendeten Analyseprobentiegel der kürzere Begriff "Tiegel" verwendet.

Im Vergleich, beispielsweise zu Geräten, die nicht zu Labortätigkeiten wie der Herstellung von Analyseproben, sondern zur industriellen Herstellung von Gegenständen verwendet werden und bei denen die aufzuschmelzende Materialmenge im Bereich von mehreren, evtl. mehreren hundert, Kilogramm liegt und deren Volumen in etlichen Litern oder evtl. Kubikmetern gemessen wird, sind die Analyseproben einer Röntgenfluoreszenzanalyse vergleichsweise sehr kleine Mengen, so dass auch dir dafür verwendeten Geräte vergleichsweise kleine bauliche Abmessungen aufweisen.

Die in der industriellen Herstellung verwendeten Tiegel beispielsweise sind üblicherweise so groß, dass sie nicht in-den Schmelzofen eingestellt werden, sondern vielmehr das aufgeschmolzene, im Ofen flüssig vorliegende Material aus dem Ofen in den Tiegel gegossen wird oder direkt, ohne einen Ofen zu verwenden, in dem beheizbaren Tiegel aufgeschmolzen wird. Da die Tiegel nicht in den Schmelzofen eingestellt werden, sind sie gegen die hohen Schmelztemperaturen auch nicht in vollem Umfang beständig, sondern weisen lediglich eine hitzebeständige Auskleidung auf, beispielsweise aus keramischem Material, die mit der Schmelze in Kontakt kommt. Eine äußere Hüllschicht, beispielsweise aus Metall, weist jedoch keine ausreichende Beständigkeit auf gegenüber der Temperatur des aufgeschmolzenen Materials, welches sich in dem Tiegel befindet, und nicht gegenüber einer in einem Schmelzofen herrschenden Temperatur, und insbesondere nicht gegenüber der Temperatur, die in einem Schmelzofen herrscht, welcher zum Herstellen von Analyseproben einer Röntgenfluoreszenzanalyse verwendet wird. Gießeinrichtungen, die zur industriellen Verarbeitung großer Materialmengen dienen, sind daher gattungsfremd gegenüber einer Anordnung zum Herstellen von Analyseproben einer Röntgenfluoreszenzanalyse.

Nachfolgend werden kurz einige Beispiele aus dem gattungsfremden Bereich der industriellen Herstellung erwähnt:
Aus der DE 589 569 A ist eine gattungsfremde Kippvorrichtung für Schmelztiegel, Schmelzöfen oder andere Behälter bekannt, die zur Aufnahme von Schinelzen dienen. Dabei ist nicht vorgesehen, einen Tiegel in einen Ofen zu stellen und den Tiegel dementsprechend von außen mit Hitze zu belasten.

Aus der EP 0 775 906 A1 ist ein Tiegel bekannt, der zum Herstellen von Analyseproben einer Röntgenfluoreszenzanalyse dienen soll. Der Tiegel weist im Boden ein Loch auf. Das Probenmaterial bildet zunächst eine Brücke, die verhindert, dass es aus dem Loch nach unten aus dem Tiegel herausrieselt. Wenn das Probenmaterial jedoch aufgeschmolzen und somit verflüssigt wird, kann es in flüssiger Form durch das Loch ablaufen, so dass es automatisch in eine unter dem Tiegel bereitgestellte Auffangschale gelangt. Es ist nicht erwähnt, das Probenmaterial mit Hilfe von Bewegungen des Tiegels und / oder des Halters zu durchmischen.

Aus der DE 25 04 918 A1 ist ein Tiegel zum Schmelzen, Warmhalten und Gießen von Metallen bekannt. Bei diesem Tiegel ist innerhalb der Schmelze eine Heizquelle angeordnet, so dass die Hitzeentwicklung im Inneren des Tiegel erfolgt. Auch hier ist nicht vorgesehen, den Tiegel in einen Ofen zu stellen und den Tiegel dementsprechend von außen mit Hitze zu belasten.

Aus der DE 28 06 335 A1 ist eine Anordnung an kippbaren Tiegelöfen bekannt, die eine Beseitigung eines verbrauchten Tiegels in bequemer und umweltfreundlicher Weise ermöglichen soll. Hydraulische Kippzylinder, die ansonsten zum Kippen und Leeren des Tiegelofens dienen, können auch genutzt werden, um den verbrauchten Tiegelofen insgesamt anzuheben, so dass er anschließend abgerissen werden kann oder auch teilweise erneuert werden kann, indem eine neue Stampfmasse in den Tiegelofen eingestampft wird.

Aus der WO 97/06060 A1 ist es bekannt, einen Tiegel um zwei Achsen beweglich zu lagern, um geschmolzene Metalle oder Metall-Legierungen beim Gießvorgang zielgenau in eine Form zu gießen. Die Tiegelhalterung kann einen Hydraulikmotor aufweisen. Es ist nicht vorgesehen, den Tiegel samt seiner Halterung in einen Ofen zu stellen.

Aus der DE 10 2010 037 866 A1 ist ein Elektroherd für Holzplatten bekannt.

Aus der DE 906 428 B ist ein periodisch arbeitender Brennofen bekannt, der insbesondere zum Brennen keramischer Waren dient, die keine Erschütterungen vertragen. Dazu werden die Waren fest gelagert, und teile des Ofens sind als Haube ausgestaltet, die auf Rädern beweglich ist.

Die DE 1 596 729 A betrifft nicht die Herstellung von Analyseproben, sondern von Glasgegenständen. Deren Haltbarkeit ist durch die Oberflächenhärte des Glases stark beeinflusst. Diese Druckschrift betrifft ein Verfahren zur Erhöhung der Festigkeit der Glasgegenstände.

Bei der Herstellung von Analyseproben einer Röntgenfluoreszenzanalyse hingegen wird der Tiegel nicht außerhalb des Ofens angeordnet und aus dem Ofen mit dem geschmolzenen Probenmaterial befüllt, und erstellt auch nicht einen direkt beheizten Tiegelofen dar, sondern er wird in den Ofen gestellt und durch die im Ofen herrschende Temperatur passiv erwärmt. Für einen Analyseprobentiegel ist daher wesentlich, dass nicht nur eine feuerfeste Auskleidung im Inneren des Tiegels der Temperatur der Schmelze ausgesetzt ist, sondern dass er vollständig der im Ofen herrschenden Temperatur ausgesetzt ist. Aus diesem Grund weisen die Analyseprobentiegel auch keine innere Auskleidung auf, sondern bestehen insgesamt aus einem Material, das thermisch gegen die im Ofen herrschenden Temperatur und chemisch gegen das Probenmaterial beständig ist, beispielsweise aus Platin bzw. einer Platinlegierung.

Häufig sind mehrere Tiegel, beispielsweise 2, 4 oder 6 Tiegel, gemeinsam in einem Ofen angeordnet. Aufgrund der geringen Abmessungen werden die verwendeten Öfen als Tischgeräte bezeichnet, die beispielsweise auf einem Labortisch aufgestellt werden können. Aber auch wenn die Öfen auf den Boden aüfgestellt werden oder beispielsweise ein auf den Boden aufstehendes eigenes Untergestell aufweisen, werden sie im Rahmen des vorliegenden Vorschlags aufgrund ihres vergleichsweise geringen Nutzvolumens als so genannte Tischgeräte, bezeichnet.

Aus der DE 16 48 994 C3 ist es bekannt, das Probenmaterial im Tiegel abzukühlen. Elektrischer Strom wird durch den glasartigen Körper des Probenmaterials während der Abkühlung geleitet, um das Anhaften des Probenmaterials an dem Tiegel zu vermeiden und später die erstarrte Probe leicht aus dem Tiegel entnehmen zu können.

Das im Ofen aufgeschmolzene Probenmaterial wird zu einer flachen runden Probe verarbeitet, die als "Tablette" bezeichnet wird und ein vergleichsweise geringes Volumen aufweist, beispielsweise ungefähr die Abmessungen einer Ein- oder Zwei-Euro-Münze. Um die Tablette herzustellen wird das im Tiegel aufgeschmolzene Probenmaterial aus dem Tiegel in eine Auffangschale gekippt. Es ist bekannt, diesen Kippvorgang noch im Ofen durchzuführen, um ein vorschnelles Auskühlen der Materialprobe zu verhindern. Aus diesem Grund sind die Auffangschalen, die teilweise auch als Kokillen bezeichnet werden, im Ofen unterhalb des Tiegels angeordnet. Die Auffangschale weist eine Mulde auf, welche die Form der entstehenden Tablette bestimmt. Erst die Tablette ist dann der Gegenstand des eigentlichen Analyseverfahrens.

Abgesehen von dem zu untersuchenden Material enthält die Tablette auch Zusatzmaterial als Füllstoff, wobei dieses Zusatzmaterial häufig in Form von Glas vorliegt. Um eine innige Vermischung des eigentlichen Probenmaterials mit dem Zusatzmaterial innerhalb des Tiegels zu erzielen, werden die Tiegel bewegt. Rührwerkzeuge in die Tiegel einzuführen, hat sich aus verschiedenen Gründen in der Praxis nicht bewährt. Daher ist es bekannt, die kompletten Tiegel samt ihrer Halterung und samt dem Tiegelinhatt in Bewegung zu versetzen.

Problematisch ist in der Praxis vielfach, dass die Halterung, die im Ofen angeordnet ist, einem Verschleiß unterliegt, der unerwünscht hoch ist. Bricht eine solche Halterung und muss ausgetauscht werden, so ist der betreffende Ofen für beispielsweise 2, 4 oder 6 Tiegel während der Reparaturdauer nicht zu benutzen, was einen erheblichen wirtschaftlichen Schaden bedeutet. Die Empfindlichkeit der Halterungen liegt unter anderem darin begrühdet, dass die gesamte Halterung mit sämtlichen darin befindlichen Tiegeln zur Durchmischung der Proben bewegt wird und dabei hohen Temperaturen ausgesetzt ist. Weiterhin ist die Halterung mit sämtlichen Tiegeln kippbar gelagert, um sämtliche Tiegel gleichzeitig in die darunter befindlichen Auffangschalen ausleeren zu können. Diese gleichzeitige Ausleerung ist zum Vermeidung eines vorschnellen, unerwünschten Auskühlens der Proben vorteilhaft, so dass aus diesem Grund die Tiegel möglichst nicht nacheinander ausgeleert werden.

Eine gattungsfremde Anordnung ist aus der DE 103 38 886 A1 bekannt. Bei dieser Anordnung weist der Ofen keinen geschlossenen Innenraum auf. Mittels eines Gasbrenners wird auch bei einem nach oben offenen Ofenraum eine ausreichende Heizleistung zur Verfügung gestellt, um das Probenmaterial aufschmelzen zu können. Dadurch, dass die als Wechselrahmen bezeichnete Halterung für die mehreren Tiegel herausnehmbar und um 180° gedreht wieder einsetzbar ist, kann diese gattungsfremde Anordnung mit zwei unterschiedlichen Funktionen betrieben werden, so dass es als bifunktionales Aufschlussgerät bezeichnet wird. Um die Halterung unterschiedlich anzuordnen, muss der Ofen zunächst abgekühlt werden.

In den beiden unterschiedlichen Funktionsweisen des Ofens können je nach Anordnung der Halterung entweder die Tiegel in Kokillen entleert werden, indem die gesamte Halterung mit sämtlichen Tiegeln gekippt wird, oder die Tiegel können in Teflonoder Keramiktiegel mit Maghetrührer entleert werden. Die beiden unterschiedlichen Funktionsweisen gehen mit einem automatisch umgeschalteten Betrieb von Haupt- und Neben-Gasbrennern einher, so dass mittels der unterschiedlichen Anordnung der Halterung zwei unterschiedliche Betriebsarten der Anordnung ermöglicht werden sollen, welche die Anschaffung zweier separater Probenvorbereitungsgeräte überflüssig macht.

Um das Probenmaterial innerhalb des Tiegels zu durchmischen, ist bei der beschriebenen gattungsfremden Anordnung eine Rührvorrichtung vorgesehen. Diese besteht aus dem Wechselrahmen und aus den darin enthaltenen Tiegeln, sowie aus einem Antrieb mit Riemenantrieb und Antriebsscheiben. Dieser vergleichsweise aufwendige Antrieb sowie die Tatsache, dass der gesamte Wechselrahmen mit sämtlichen Tiegeln in Bewegung gesetzt wird, führt zu einer negativ hohen Störanfälligkeit der gesamten Anordnung. Wenn beispielsweise der Wechselrahmen aufgrund seiner Schwingungsbelastung versagt, beilspielsweise bricht, muss der gesamte Wechselrahmen entfernt und ausgetauscht werden. Damit einhergehend ist der Betrieb der Anordnung für sämtliche in der Halterung aufzunehmenden Tiegel für die Zeit der Reparatur unterbrochen.

Bei gattungsgemäßen, aus der Praxis bekannten Anordnungen weist demgegenüber der Ofen einen geschlossenen Innenraum auf. Dadurch weist eine gattungsgemäße Anordnung geringer Temperaturverluste auf als die beschriebene gattungsfremde Anordnung mit offenem Ofen, Infolgedessen können gattungsgemäße Anordnungen erstens wirtschaftlicher betrieben werde und zweitens auch mit Heizeinrichtungen betrieben werden, die eine geringere Heizleistung aufweisen als ein Gasbrenner, nämlich beispielsweise mit einer elektrischen Beheizung, die aus Sicherheitsgründen als vorteilhaft angesehen werden kann. Im Gegensatz zu der beschriebenen gattungsfremden Anordnung, bei welcher die Heizwirkung der Gasbrenner auf einen kleinen Bereich konzentriert ist, beispielsweise auf die Tiegel, herrsche bei einer gattungsgemäßen Anordnung eine im wesentlichen gleichmäßige Temperatur im gesamten, geschlossenen Innenraum des Ofens. Die Halterungen der Tiegel sind daher bei einer gattungsgemäßen Anordnung höheren thermischen Belastungen ausgesetzt. Das gleiche gilt.zusätzlich für die ebenfalls im Ofeninnenraum befindlichen Antriebselemente der Halterung, welche dazu dienen, die Halterung mitsamt der Tiegel in eine Mischbewegung zu versetzen, welche die Durchmischung des Probenmaterials in den Tiegeln bewirkt. Eine Reparatur der Halterungen ist vergleichsweise aufwendig und beansprucht eine vergleichsweise lange Zeit, da zur Demontage der Halterung erst der Ofen abgekühlt werden muss.

Aus der US 5 315 091 A und der EP 2 270 410 B1 ist jeweils ebenfalls eine gattungsgemäße Anordnung bekannt, und aus der DE 35 07 493 A1 ist eine Anordnung zum Herstellen von Analyseproben einer Röntgenfluoreszenzanalyse bekannt, bei dem die Auffangschale nach unten offen oberhalb des Tiegels angeordnet ist. Zur Herstellung der Tabletten werden die Tiegel und die Auffangschalen gedreht.

Aus der EP 0 501 835 A2 ist ebenfalls eine gattungsgemäße Anordnung bekannt, die im Öfen mehrere Halter für jeweils einen Tiegel aufweist. Die Halter mitsamt den darin gehaltenen Tiegeln, können um zwei Schwenkachsen bewegt werden. Durch eine Programmierung der Antriebe und durch Überlagerung der beiden Schwenkbewegungen lassen sich bestimmte, unterschiedliche Bahnkurven festlegen, entlang derer das Probenmaterial in den Tiegeln gemischt werden kann. Um die Halter in der Schwenkanordnurig zu sichern, werden sie jeweils in einem geschlitzten Klemffiblöck gehalten, dessen Schlitzweite mittels einer Klemmschraube verändert werden kann. Der in den Klemmblock eingesteckte Halter ist grundsätzlich darin festgelegt, kann jedoch aus dem Klemmblock entnommen werden, indem die Klemmschraube betätigt und dadurch die Schlitzweite vergrößert wird.

Der Erfindung liegt die Aufgabe zugrunde, eine gattungsgemäße Anordnung dahingehend zu verbessern, dass diese mit möglichst hoher Produktivität und dementsprechend möglichst kurzen Ausfallzeiten betrieben werden kann, sowie geeignete Komponenten für diese Anordnung und auch ein Verfahren zum Herstellen von Analyseproben einer Röntgenfluoreszenzanalyse anzugeben.

Diese Aufgabe wird durch eine Anordnung mit den Merkmalen des Anspruchs 1 sowie durch ein Verfahren nach Anspruch 23 gelöst. Eine vorteilhafte Ausgestaltung der Anordnung kann insbesondere mittels einer Halterung nach Anspruch 5, eines Tiegels nach Anspruch 12, eines Ofens nach Anspruch 16 und / oder einer Auffangschale nach Anspruch 21 erreicht werden. Weitere vorteilhafte Ausgestaltungen des vorliegenden Vorschlags sind in den Unteransprüche beschrieben.

Die Neuerung schlägt mit anderen Worten vor, dass die Halterung als ein vom Ofen getrenntes Element ausgestaltet ist, welches separat vom Ofen gehandhabt werden kann und während des Schmelzvorgangs lose in den Ofen eingestellt ist, also nicht im Ofen befestigt ist. Sollte die Halterung beschädigt werden, so kann sie innerhalb kürzester Zeit gegen eine Ersatzhalterung ausgetauscht werden. Beispielsweise wird der Ofen regelmäßig geöffnet, um die Tiegel zu entnehmen und gegen neue, mit ungeschmolzenem Probenmaterial gefüllte Tiegel auszuwechseln. Gleichzeitig werden die in die Auffangschalen abgegossenen Proben ebenfalls aus dem Ofen entnommen und entweder werden die Auffangschalen entleert und wieder in den Ofen eingestellt oder es werden neue, leere Auffangschalen in den Ofen eingestellt. Während dieser ohnehin erfolgenden Handlungen kann problemlos die lediglich lose in den Ofen eingestellte Halterung ausgetauscht werden, so dass die Unterbrechung des O-fenbetriebs um lediglich wenige Sekunden verlängert wird und der Ofenbetrieb, bei dem chargenweise nach und nach ein oder mehrere Tiegel mit Probenmaterial bis zur Schmelze des Probenmaterials erhitzt werden, nahezu unverändert weitergehen kann. Insbesondere kann aufgrund der losen Anordnung der Halterung im Ofen eine schnelle Entnahme von Tiegel und Auffangschale dadurch ermöglicht werden, dass die Halterung, bestückt mit dem Tiegel und der darunter befindlichen Auffangschale, aus dem Ofen entnommen wird.

Vorschlagsgemäß wird daher die vorschlagsgemäße Anordnung derart gehandhabt, dass sich sowohl der Tiegel als auch die Halterung vor Beginn des Schmelzvorgangs außerhalb des Ofens befindet, und dass die Halterung vor Beginn des Schmelzvorgangs außerhalb des Ofens mit dem Tiegel bestückt wird und mitsamt dem Tiegel in den Ofen gestellt wird.

Ebenso kann nach dem Schmelzvorgang die Halterung mitsamt dem Tiegel aus dem Ofen entnommen werden, mit einem neuen Tiegel bestückte werden und für einen neuen Schmelzvorgang erneut, mitsamt dem neuen Tiegel, in den Ofen gestellt werden. Dies spart Zeit, da nicht die zuvor verwendeten Gerätschaften wie z. B. Tiegel und Auffangschale abkühlen und gereinigt werden müssen, bevor sie erneut eingesetzt werden können.

Die gemeinsame Handhabung des Tiegels und ggf. auch der Auffangschale mitsamt der Halterung spart beim Einsetzen und beim Entnehmen aus dem Ofen Zeit, da nicht zwei Teile erst aus der Halterung entnommen und anschließend gehandhabt werden müssen, sondern vielmehr mit einem einzigen Handgriff gemeinsam gehandhabt werden können.

Die vom Ofen separate Ausgestaltung der Halterung ermöglicht einen nahezu kontinuierlichen Schmelzprozess: vorteilhaft kann nämlich bereits eine zweite Halterung vorbereitet werden, während sich eine erste Halterung mitsamt einem ersten Tiegel im Ofen befindet und das Probenmaterial in diesem ersten Tiegel aufgeschmolzene wird. Die Vorbereitung der zweiten Halterung besteht darin, dass diese mit einem zweiten Tiegel bestückt wird, der ungeschmolzenes Probenmaterial enthält, und dass diese zweite Halterung ggf. auch mit einer zweiten, leeren Auffangschale bestückt wird. Wenn der Ofen geöffnet wird, kann die zweite Halterung sofort in den Ofen eingesetzt werden, nachdem die erste Halterung entnommen worden ist. Temperaturverluste des geöffneten Ofens werden auf diese Weise möglichst gering gehalten, und die Taktzeit für das nacheinander erfolgende Aufschmelzen der einzelnen Proben kann möglichst kurz gehalten werden.

Vorschlagsgemäß ist vorgesehen, dass die Halterung lose in den Ofen eingestellt ist. Lose bedeutet dabei im Rahmen des vorliegenden Vorschlags, dass die Halterung problemlos une schnell in den Ofen eingesetzt und aus diesem wieder entnommen werden kann, ohne beispielsweise - eventuell sogar unter Verwendung von Werkzeug - zunächst als eigenen Verfahrensschritt Riegel lösen bzw. Befestigungselemente betätigen zu müssen, welche die Halterung im Ofen sichern, da die Halterung ist nicht in dem Ofen befestigt ist. Beispielsweise kann die Halterung aufgrund ihres Eigengewichts und / oder ihrer Geometrie so standfest sein, dass sie auch mit einem gefüllten Tiegel zuverlässig gegen abhebende Kräfte oder gegen ein Umfallen innerhalb des Ofens gesichert ist. In diesem Fall bedarf

es keiner zusätzlichen Maßnahmen, um die Halterung sicher im Ofen anzuordnen. Die Bemessung der erwähnten Standfestigkeit hängt insbesondere auch von den vorgesehenen Mischbewegungen ab, denen der Tiegel und auch die Halterung bei einem bestimmungsgemäßen Gebrauch des Ofens ausgesetzt wird.

Es kann jedoch vorgesehen sein, die Halterung zusätzlich im Ofen zu sichern, wobei auch in diesem Fall die Halterung "lose" im Sinne des vorliegenden Vorschlags im Ofen angeordnet werden kann: beispielsweise kann vorgesehen sein, die Halterung in Führungsnuten oder dergleichen einzuschieben, so dass sie mitsamt dem Tiegel sicher im Ofen steht, wenn die auf den Tiegel einwirkenden Mischbewegungen erfolgen. Auch kann vorgesehen sein, dass beim Einstellen der Halterung in den Ofen automatisch Riegel betätigt werden, die schwenkbar oder anderweitig beweglich sind. Beispielsweise kann ein Riegel vorgesehen sein, der schwenkbar gelagert ist und sich von dem Schwenklager in eine erste Richtung erstreckt. Der Riegel weist einen Betätigungszapfen auf, der sich von dem Schwenklager in eine zweite Richtung erstreckt. Wird die Halterung in den Ofen eingeschoben, so gerät sie gegen den Betätigungszapfen. Ohne den Betätigungszapfen oder den Riegel eigens handhaben zu müssen, wird der Riegel bei der weiteren Bewegung der Halterung automatisch verschwenkt und übergreift oder umgreift beispielsweise einen Abschnitt der Halterung, so dass diese gegen abhebende Kräfte oder gegen ein Umfallen innerhalb des Ofens gesichert ist. Bei der Entnahme der Halterung aus dem Ofen in umgekehrter Bewegungsrichtung wird automatisch mittels der Halterung der Riegel wieder zurückgeschwenkt, so dass die Halterung genauso unkompliziert aus dem Ofen entnommen werden kann, als hätte sie tatsächlich vollkommen ungesichert im Ofen gestanden.

Vorteilhaft kann vorgesehen sein, dass bei der Anordnung mehrerer Tiegel innerhalb desselben Ofens jeder Tiegel in einer eigenen Halterung angeordnet ist. Sollte also eine Halterung versagen, so kann diese wie oben beschrieben problemlos und innerhalb kürzester Zeit ausgewechselt werden. Dabei vereinfacht sich dieses Auswechseln der Halterung dadurch, dass eine vergleichsweise kleine Halterung gehandhabt werden muss, die nämlich nicht zur Aufnahme mehrerer Tiegel ausgestaltet ist. Sollte jedoch keine ersatzweise zu verwendende Halterung bereitstehen, so wird der Ofenbetrieb nicht vollständig unmöglich, sondern vielmehr können sämtliche anderen Halterungen, die nicht defekt sind und dementsprechend nicht aus dem Ofen entfernt werden müssen, nach wie vor mit Tiegeln bestückt werden, so dass entsprechend der Anzahl der im Ofen verwendeten Tiegel und Halterungen der Betrieb des Ofens lediglich zu einem dementsprechend geringen Prozentsatz beeinträchtigt wird, wie es der einen fehlerhaften Halterung und dem einen dementsprechend nicht mehr verwendbaren Tiegel entspricht.

Mit der separaten Aufnahme jedes einzelnen Tiegels in jeweils einer eigenen Halterung ist zudem ein weiterer Vorteil der vorschlagsgemäßen Anordnung verwirklicht: Unterschiedlich ausgestaltete Tiegel können problemlos innerhalb desselben Ofens verwendet werden, da sie jeweils mit einer dazu geeigneten Halterung im Ofen angeordnet werden können, im Gegensatz zu einer für mehrere Tiegel vorbereiteten Halterung, bei der dann stets nur bestimmte, an diese Halterung angepasste Tiegel verwendet werden können.

Alternativ zu der oben beschrieben Ausgestaltung der Halterung, die nur einen einzigen Tiegel aufnimmt, kann ebenfalls vorteilhaft vorgesehen sein, zwei oder mehr Tiegel in derselben Halterung anzuordnen. Die Entnahme der Halterung aus dem Ofen ermöglicht in diesem Fall die gleichzeitige Entnahme mehrerer Tiegel, und, bei Verwendung einer geeigneten, auf sämtliche Tiegel gleichzeitig einwirkende Kippmechanik, auch das gleichzeitige Abgießen dieser mehreren Tiegel in ihre jeweiligen Auffangschalen. Zudem wird die Entnahme der Tiegel und eine anschließende erneute Beschickung des Ofens dadurch erleichtert, dass nur eine einzige Halterung gehandhabt werden muss, so dass nicht eine bereits in den Ofen eingestellte Halterung bei der Handhabung der nächsten separaten Halterung hinderlich im Wege ist. Schließlich wird dadurch, dass nur eine einzige Halterung gehandhabt werden muss, die Zeitspanne verkürzt, während welcher der Ofen bei der Beschickung mit neuen Tiegeln oder bei der Entnahme der Tiegel geöffnet ist, so dass Wärmeverluste verringert werden. Dies ist nicht nur ökologisch und ökonomisch wegen des verringerten Aufheiz- und damit Energiebedarfs vorteilhaft, sondern verkürzt auch die Zykluszeiten, die für das Herstellen der Proben erforderlich sind.

Vorteilhaft kann vorgesehen sein, dass nicht die gesamte Halterung gekippt wird, um den Tiegel auszuleeren. Vielmehr kann vorteilhaft der Tiegel kippbeweglich innerhalb der Halterung gelagert sein, so dass eine Relativbewegung zwischen dem Tiegel und der Halterung ermöglicht wird und lediglich der Tiegel gekippt werden muss, während die Halterung selbst unverändert ihre Position beibehalten kann. Auf diese Weise wird eine besonders einfache Ausgestaltung der Halterung insofern ermöglicht, als diese Halterung nicht an eine Antriebsmechanik innerhalb des Ofens angeschlossen zu werden braucht, da nämlich nicht die Halterung selbst mitsamt dem darin befindlichen Tiegel gekippt werden muss. Insbesondere wenn ohnehin vorgesehen ist, wie weiter oben beschrieben, jeweils jedem Tiegel eine eigene Halterung zuzuordnen, können unterschiedliche Kippmechanismen Anwendung finden, so dass unterschiedlich ausgestaltete Tiegel, die gegebenenfalls hinsichtlich ihrer Kippbeweglichkeit unterschiedlich ausgestaltet sind, jeweils in einer dazu passenden Halterung gehalten sind.

Für die in der vorschlagsgemäßen Anordnung zu verwendenden Halterungen kann vorteilhaft vorgesehen sein, dass die Halterung ein Kipplager aufweist, welches den Tiegel aufnimmt. Dies kann beispielsweise darin bestehen, dass die Halterung Ausnehmungen aufweist, die gemeinsam eine Kippachse bilden und dass auch der Tiegel damit zusammenwirkende Vorsprünge aufweist, die ebenfalls eine Kippachse bilden, so dass der Tiegel mit seinen Vorsprüngen in die Ausnehmungen der Halterung eingehängt werden kann und um die nun von Halterung und Tiegel gemeinsame Kippachse gekippt werden kann. In genauer Umkehr dieses Lagerungsprinzips kann vorgesehen sein, an der Halterung Vorsprünge vorzusehen, in die ein mit entsprechenden Einbuchtungen oder Ausnehmungen versehener Tiegel eingehängt werden kann, so dass auch dann durch die zusammenfallenden Kippachsen des Tiegels einerseits und der Halterung andererseits ein Kipplager geschaffen wird, um welches der Tiegel geschwenkt werden kann, um das aufgeschmolzene Probematerial in eine Auffangschale auszugießen, die beispielsweise auch als Kokille bezeichnet sein kann.

Vorteilhaft kann die Halterung nicht nur dazu dienen den Tiegel aufzunehmen, sondern sie kann auch vorteilhaft eine Aufnahme für die Auffangschale aufweisen, so dass auf diese Weise eine definierte Anordnung der Auffangschale sichergestellt ist. Auf diese Weise ist sichergestellt, dass, wenn der Tiegel ausgekippt wird, der Tiegelinhalt sicher in die Auffangschale fließt.

Um die gewünschte Position der Auffangschale in der Halterung sicherzustellen, kann die Auffangschale vorteilhaft entlang ihrer umlaufenden Umrandung eine Aussparung und / oder einen Vorsprung aufweisen, so dass an die Formgebung der Halterung ein Formschluss zwischen der Auffangschale und der Halterung bewirkt wird. Durch den Formschluss ist die Auffangschale gegen bestimmte Relativbewegungen zur Halterung, nämlich gegen Verschiebungen in horizontalen Richtungen gesichert.

Der erwähnte Formschluss kann vorteilhaft dadurch bewirkt werden, dass die Auffangschale entlang ihrer umlaufenden Umrandung zwei Einkerbungen aufweist, z. B. zwei einander gegenüberliegende Einkerbungen, so dass zwei Elemente der Halterung in diese beiden Einkerbungen ragen können. Hierdurch ist die Auffangschale an der Halterung in sämtlichen Richtungen gesichert, die in einer horizontalen Ebene liegen. Nach oben hin kann die Auffangschale jedoch problemlos aus der Halterung entnommen werden. Ein Formschluss kann jedoch auch dadurch bewirkt werden, dass die Auffangschale eine Mulde aufweist, welche sich in eine entsprechende Vertiefung oder Aussparung der Halterung erstreckt.

Vorteilhaft können mehrere derartige Formschlüsse zwischen Auffangschale und Halterung vorgesehen sein. Dadurch kann einerseits die Auffangschale besonders sicher in ihrer gewünschten Position in der Halterung gehalten werden. Andererseits kann dadurch eine problemlose Beweglichkeit der Auffangschale gegenüber der Halterung ermöglicht werden, wenn die Auffangschale in die Halterung eingelegt oder aus dieser entnommen werden soll. Insbesondere wenn die Auffangschale und die Halterung aus unterschiedlichen Werkstoffen mit unterschiedlichen thermischen Ausdehnungskoeffizienten bestehen, können die zwei oder mehreren Formschlüsse mit vergleichsweise großen maßlichen Toleranzen ausgestaltet sein, so dass sichergestellt ist, dass die Auffangschale in der Halterung nicht geklemmt und deren Handhabung behindert wird.

Vorteilhaft kann in überraschender Weise vorgesehen sein, dass die Halterung aus einer hoch warmfesten, hoch kohlenstoffhaltigen Nickel-Chrom-Eisen-Legierung besteht. Eine solche Legierung ist unter der Bezeichnung "Nicrofer" von der Firma Krupp handelsüblich. Diese Legierung ist für die im Ofen herrschenden Temperaturen problemlos langzeitbeständig. Überraschend hat sich herausgestellt, dass sich im Zusammenspiel mit dem Tiegelmaterial, welches beispielsweise in an sich bekannter Ausgestaltung des Tiegels Platin sein kann, keine negativen Auswirkungen auf den Tiegel oder auf die Halterung ergeben, so dass der Tiegel über lange Zeit, d. h. über eine Vielzahl von Versuchen problemlos mit dieser Halterung verwendet werden kann. Das Raumgewicht dieses metallischen Werkstoffs ist so hoch, dass die Halterung mitsamt dem darin gelagerten Tiegel auch dann standsicher ist, wenn sie gemeinsam zum Durchmischen des Probenmaterials im Ofen bewegt werden.

Alternativ zu diesem Material kann vorgesehen sein, die Halterung aus einem anderen Material zu schaffen, welches für die vorgesehene Temperaturbeanspruchung eine geeignete Beständigkeit aufweist. Beispielsweise können keramische Werkstoffe Verwendung finden, insbesondere Siliziumnitrid. Die keramischen Werkstoffe können nämlich gegebenenfalls eine gegenüber metallischen Werkstoffen höhere chemische Beständigkeit aufweisen, wenn sie unter den im Ofen herrschenden Temperaturen mit dem Probenmaterial in Kontakt kommen, z. B. wenn aufgrund der Tiegelbewegung Spritzer des Probenmaterials aus dem Tiegel gelangen.

Auch kann vorteilhaft vorgesehen sein, das die Halterung aus einer Kombination unterschiedlicher Werkstoffe besteht. So kann die Halterung beispielsweise in ihrem unteren Bereich zugunsten ihrer Standsicherheit aus einem schweren Werkstoff bestehen, und nach oben, zum Tiegel hin, aus einem chemisch beständigeren Werkstoff bestehen, der einerseits selbst gegenüber Spritzern aus dem Tiegel unempfindlich ist und zudem den im unteren Bereich der Halterung verwendeten Werkstoff vor Spritzern schützen kann.

Vorteilhaft kann vorgesehen sein, dass das Kipplager möglichst randnah in der Halterung angeordnet ist. So ist eine intensive Durchmischung des Probenmaterials möglich, indem möglichst starke Zentrifugalkräfte auf das Probenmaterial einwirken, wenn die Halterung mittels einer Drehbewegung oszillierend hin und her gedreht wird. Wenn die Halterung beispielsweise auf einer oszillierend rotierenden Scheibe steht, kann sie möglichst randnah, also möglichst weit entfernt vom Mittel- bzw. Drehpunkt der Scheibe, angeordnet werden, und die randnahe Anordnung des Tiegel-Kipplagers stellt sicher, dass auch der Tiegel seinerseits innerhalb der Halterung möglichst weit außen auf der oszillierend rotierenden Scheibe angeordnet ist.

Ein Tiegel, welcher im Rahmen der vorschlagsgemäßen Anordnung vorteilhaft verwendet werden kann, kann vorteilhaft zwei gegenüberliegende Vorsprünge aufweisen, welche eine Kippachse des Tiegels bilden, wie dies bereits weiter oben erwähnt worden ist. In genauer Umkehr der konstruktiven Ausgestaltung der Lagerung kann, wie beschrieben, der Tiegel auch zwei gegenüberliegende Einbuchtungen oder Ausnehmungen aufweisen, um die Tiegel-Kippachse zu schaffen, wenn dementsprechend an der Halterung nicht Ausnehmungen für die Vorsprünge des Tiegels vorgesehen sind, sondern die Halterung ihrerseits zwei gegenüberliegende Vorsprünge aufweist.

Vorteilhaft kann der Tiegel eine Ausgießtülle aufweisen, die eine zielgerichtete Ausleerung des aufgeschmolzenen Probenmaterials ermöglicht.

Vorteilhaft kann der Tiegel einen Vorsprung aufweisen, der als Handhabe dient, um den Tiegel um seine Kippachse kippen zu können. Auf diese Weise ist es nicht erforderlich, den Tiegel insgesamt aus der Halterung entnehmen zu müssen, sondern vielmehr muss lediglich dieser Vorsprung erfasst und bewegt werden, um den Tiegel entleeren zu können. Beispielsweise kann dazu eine einfache und robust ausgestaltete Mechanik vorgesehen sein, beispielsweise eine liegend verlaufender Balken. Da die Kippmechanik nicht das vergleichsweise hohe Gewicht des Tiegels und der Halterung bewegen muss, kann auch eine kleine und preisgünstige Kippmechanik mit geringer Antriebsleistung für die zu handhabenden Kräfte überdimensioniert und dementsprechend robust sein.

Wenn eine oder mehrere mit Tiegeln bestückte Halterungen in dem Ofen angeordnet sind, oder wenn eine mit mehreren Tiegeln bestückte Halterung in dem Ofen angeordnet ist, können diese vorteilhaft so ausgerichtet sein, dass sich die Vorsprünge der Tiegel oberhalb des erwähnten Balkens befinden. Wenn nun die Proben in den Tiegeln aufgeschmolzen sind, muss lediglich der erwähnte Balken angehoben werden, um sämtliche Tiegel zeitsparend gleichzeitig entleeren zu können.

Dabei kann vorteilhaft vorgesehen sein, dass der erwähnte Vorsprung der vorerwähnten Ausgießtülle des Tiegels gegenüberliegend angeordnet ist. Durch Anheben des Vorsprungs wird die Ausgießtülle abgesenkt, so dass nun die Flüssigkeit des aufgeschmolzenen Probenmaterials zielgenau aus dem Tiegel ausströmen kann.

Als eine erste Alternative bei der Ausgestaltung der Kippmechanik kann vorgesehen sein, diese im Inneren des Ofens anzuordnen, so dass ohne Temperaturverluste das aufgeschmolzene Probenmaterial sofort in die Auffangschale gefüllt werden kann. Auch werden Temperaturverluste des Ofens auf diese Weise minimiert, da der Ofen lediglich zum Beschicken und Entleeren geöffnet werden muss. Das die Kippmechanik, wie weiter oben erwähnt, einfach und robust ausgestaltet sein kann, kann sie trotz ihrer Anordnung im Inneren des Ofens den hohen Temperaturbelastungen widerstehen.

Als eine zweite Alternative ist es möglich, die Kippmechanik außerhalb des Ofens anzuordnen und die Halterung, bestückt mit dem Tiegel und der darunter befindlichen Auffangschale, aus dem Ofen zu entnehmen und außerhalb des Ofens den Tiegel zu kippen und das Probenmaterial in die Auffangschale zu füllen. Die Kippmechanik ist dabei bis auf den Kontakt mit dem Tiegel nahezu frei von Temperaturbelastungen.

Als eine dritte Alternative, welche die Vorteile der beiden erstgenannten Lösungen vereint, kann vorgesehen sein, die Kippmechanik zwar außerhalb des Ofens anzuordnen, den Tiegel jedoch zu kippen und in die Auffangschale zu entleeren, während er sich innerhalb des Ofens befindet. Dazu wird der Ofen geöffnet und die Kippmechanik in den Ofen eingefahren. Beispielsweise kann der weiter oben erwähnte Balken in den Ofen eingeschoben werden, während die den Balken bewegende Antriebseinheit außerhalb des Ofens verbleibt. Die Temperaturverluste des Probenmaterials werden gering gehalten, da die Probe im Ofen verbleibt. Die Temperaturbelastung der Kippmechanik wird ebenfalls gering gehalten, das sie nur kurzfristig- und zudem eventuell nur bestimmte Teile der Kippmechanik-während des Kippvorgangs und nicht während der gesamten Aufschmelzdauer den im Ofen herrschenden Temperaturen ausgesetzt ist.

Als eine vierte Alternative bei der Ausgestaltung der Kippmechanik kann vorgesehen sein, diese zweiteilig auszugestalten. Beispielsweise kann der erwähnte Balken beweglich innerhalb des Ofens gelagert sein und stets im Ofen verbleiben. Die demgegenüber kompliziertere und gegen hohe Temperaturen empfindlichere Antriebseinheit der Kippmechanik kann hingegen außerhalb des Ofens angeordnet sein und dort während der Aufschmelzdauer verbleiben. Erst zum Kippen des Tiegels wird eine antriebswirksame Verbindung von der Antriebseinheit zu dem Balken geschaffen, so dass dieser bewegt werden und der Tiegel gekippt werden kann. Zur Schaffung der Verbindung kann eine kleine Öffnung im Ofen ausreichend sein, so dass Temperaturverluste des Ofens und des Probenmaterials besonders gering gehalten werden können.

Um gegen die hohen Temperaturen beständig zu sein und unzuträgliche Verunreinigungen der Probe zu vermeiden, besteht der Tiegel aus einem entsprechend geeigneten Material wie z. B. Graphit, Nickel, Zirkon oder einem Keramikmaterial, oder gegebenenfalls aus Graphit. Wie bereits erwähnt, kann der Tiegel vorteilhaft aus einer Platinlegierung bestehen. In der Praxis hat sich eine Legierung bewährt, die 95% Platin und 5% Gold enthält, jedoch sind auch andere Platinlegierungen mit Beimischungen von Gold (in einem anderen Verhältnis als 5%), Rhodium, Iridium, Palladium oder dergleichen verwendbar. Die Platinlegierung ist bei der Durchführung von Röntgenfluoreszenzanalysen angesichts der verarbeiteten Materialien und der auftretenden Temperaturen ein Werkstoff, der sich in der Praxis durch lange Haltbarkeit bewährt hat und der trotz der hohen Materialkosten angesichts der kleinen Abmessungen eines Tiegels eine wirtschaftliche Durchführung der Analysen ermöglicht.

Ein im Rahmen einer vorschlagsgemäßen Anordnung vorteilhaft zu verwendender Ofen kann vorteilhaft einen Boden aufweisen, auf dem die Halterung aufsteht. Dabei kann die Mischbewegung, welcher der Tiegel mitsamt seinem Probenmaterial unterworfen wird, vorteilhaft durch eine oszillierend hin und her gehende Drehbewegung erfolgen, so dass aufgrund der Richtungsumkehr jeweils ein besonders intensiver Mischeffekt erreicht wird. Daher kann der Boden dort, wo die Halterung auf dem Boden aufsteht, vorteilhaft als Drehscheibe ausgestaltet sein, die oszillierend drehbeweglich ist. Auf diese Weise kann eine robuste Antriebskonstruktion verwendet werden, die außerhalb des beheizten Innenraums des Ofens angeordnet werden kann und für den oszillierenden Drehantrieb der Drehscheibe sorgt. Zudem wird eine mechanisch robuste Ausgestaltung der gesamten Anordnung unter Verwendung eines solchen Ofens dadurch ermöglicht, dass keine mechanische Ankopplung der Halterung an ofenseitige Antriebsmittel erforderlich ist, um die Halterung in Bewegung zu versetzen und somit eine Mischbewegung des Tiegels zu ermöglichen. Es muss beispielsweise keine Kurbelanordnung an die Halterung angeschlossen sein, um eine Bewegung der Halterung zu verursachen, welche auf den Tiegel übertragen wird und somit die Mischung des Probenmaterials innerhalb des Tiegels bewirkt.

Alternativ dazu kann vorgesehen sein, statt eines beweglichen Ofenteils den gesamten Ofen zu bewegen, so dass dadurch die Halterung im Innenraum des Ofens und wiederum in Folge davon der in der Halterung befindliche Tiegel in Bewegungen versetzt wird, welche die gewünschte Durchmischung des Probenmaterials bewirken. Sofern der Ofen entsprechend schwingungsresistente Heizelemente aufweist, kann ein solcher von außen im Bewegung versetzter Ofen mechanisch sehr einfach aufgebaut sein. Als Ofen wird in diesem Zusammenhang das den Ofen-Innenraum umgebende Gehäuse und die den Innenraum auf die gewünschte Temperatur aufheizende Heizeinrichtung bezeichnet. Der äußere Antrieb eines solchen Ofens ist optimal vor den im Ofen herrschenden Temperaturen geschützt.

Wenn eine Halterung vorgesehen ist, die mehrere Tiegel aufnimmt, oder wenn mehrere jeweils mit einem Tiegel bestückte Halterungen vorgesehen sind, werden die Tiegel vorzugsweise derart auf der Drehscheibe angeordnet, dass sie sich auf derselben Kreisbahn befinden, so dass gleiche Mischungsbedingungen für sämtliche Tiegel sichergestellt sind.

Vorteilhaft kann die Drehscheibe nach unten abgesenkt werden, um auf diese Weise eine Ofenöffnung freizugeben, die als Beschickungsöffnung genutzt werden kann. Die angehobene Stellung, in welcher die Drehscheibe einen Teil des Ofenbodens bildet, wird als Betriebsstellung der Drehscheibe bezeichnet. Gegenüber dieser Betriebsstellung kann die Drehscheibe in eine so genannte Ladestellung abgesenkt werden, in welcher eine Beoder Entladung möglich ist. Dabei kann die Absenkung um ein vergleichsweise geringes Maß erfolgen, so dass möglicherweise nicht die gesamte Halterung aus dem Ofen entnommen werden kann, jedoch die Entnahme des Tiegels sowie der Auffangschale aus der Halterung möglich ist. Daher kann, wenn sich die Drehscheibe in ihrer abgesenkten Ladestellung befindet, die Halterung mit einem frischen Tiegel und einer frischen Auffangschale bestückt werden und anschließend wird die Drehscheibe wieder in ihre Betriebsstellung angehoben.

Dadurch, dass die Beschickung des Ofens von unten erfolgt, und da die im Ofen erhitzte Luft in an sich bekannter Weise nach oben zu steigen bestrebt ist, wird die im Ofen erzeugte Hitze zum großen Teil innerhalb des Ofens gehalten, wenn der Ofen nach unten hin geöffnet wird, um die Halterung neu zu beschicken. Es wird daher nicht nur der Betrieb des Ofens wirtschaftlich vorteilhafter, weil Auskühlverluste beim Öffnen des Ofens verringert werden, sondern es wird auch dadurch ein wirtschaftlich vorteilhafter Betrieb des Ofens unterstützt, da die Aufheizzeiten des Ofens vergleichsweise verringert werden können, da während der Be- und Entladezeiten des Ofens die Temperaturverluste möglichst gering gehalten werden, so dass anschließend das Aufheizen des Ofens auf seine gewünschte Temperatur in möglichst kurzer Zeit erfolgen kann.

Vorteilhaft kann die nach unten absenkbare Drehscheibe nicht nur so weit nach unten abgesenkt werden, dass eine Beschickung der Halterung möglich ist, also die Entnahme eines Tiegels und einer Auffangschale und die erneute Bestückung mit einem neuen Tiegel und einer neuen Auffangschale, sondern vorteilhaft kann die Drehscheibe so weit abgesenkt werden, dass die komplette Halterung von der Drehscheibe entnommen werden kann, so dass erforderlichenfalls die Halterung in kürzestmöglicher Zeit ausgetauscht werden kann.

Anhand der rein schematischen Darstellungen wird die vorliegende Erfindung nachfolgend näher erläutert. Dabei zeigt
- Fig. 1: ein erstes Ausführungsbeispiel einer Halterung mit darin angeordnetem Tiegel sowie darin angeordneter Auffangschale, in perspektivischer Ansicht,
- Fig. 2: in ebenfalls perspektivischer Ansicht den Tiegel von Fig. 1 in einer gekippten Entleerungs-Stellung, und
- Fig. 3: ein zweites Ausführungsbeispiel einer Halterung, in welcher ein Tiegel und eine Auffangschale angeordnet sind, wobei die Halterung auf einem beweglichen Teil eines Ofenbodens steht.

In den Zeichnungen ist mit 1 eine Halterung gekennzeichnet, die aus einer hoch warmfesten, hoch kohlenstoffhaltigen Nickel-Chrom-Eisen-Legierung besteht. Die Halterung 1 weist zwei seitliche Wangen 2 auf, die in ihrem unteren Bereich zueinander gerichtete schmale Auflageleisten 3 bilden. Eine Auffangschale 4 ist mit einer quadratischen Kontur versehen und weist eine mittlere kreisrunde Mulde 5 auf, um eine dementsprechend kreisrunde Tablette erzeugen zu können. Die Auffangschale 4 liegt mit zwei seitlichen Rändern auf den beiden Auflageleisten 3 der Wangen 2 auf. Sie ist gegen ein horizontales Verrutschen in sämtliche Richtungen gesichert, nämlich einerseits durch die beiden Wangen 2 und andererseits durch Haltenasen 6, welche sich jeweils an beiden Enden einer Auflageleiste 3 nach oben erstrecken.

Oberhalb der Auflageleisten 3 weisen die Wangen 2 Ausnehmungen 7 in Form von Schlitzen auf, in welche ein Tiegel 8 eingehängt ist. Ebenso wie die Auffangschale 4 besteht auch der Tiegel 8 aus einer Platinlegierung.

Der Tiegel 8 weist zwei gegenüberliegende Vorsprünge 9 auf, die gemeinsam eine Scharnierachse oder Kippachse des Tiegels 8 bilden und die sich jeweils in eine der beiden Ausnehmungen 7 erstrecken.

Weiterhin weist der Tiegel 8 einander gegenüberliegend einerseits eine Ausgießtülle 10 und andererseits einen als Handhabe 11 dienenden Vorsprung auf.

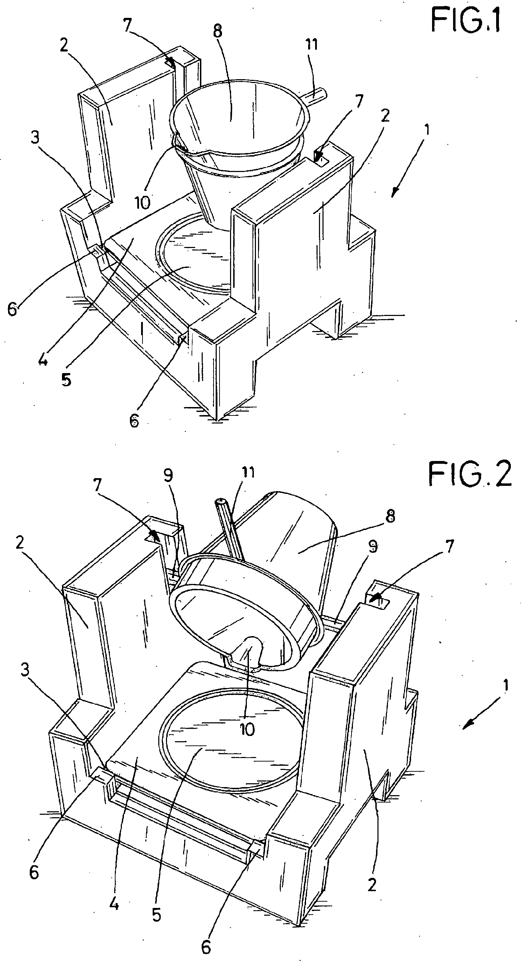

Fig. 1 zeigt den in der Halterung 1 angeordneten Tiegel 8 in einer Stellung, die er beispielsweise während des Schmelzbetriebs aufweist, während das im Tiegel 8 enthaltene Probenmaterial aufgeschmolzen wird.

Die Halterung 1 mitsamt dem darin befindlichen Tiegel 8 ist dabei lose in einen in den Zeichnungen nicht dargestellten Schmelzofen eingestellt, der einen geschlossenen Innenraum aufweist, und dessen Boden einen beweglichen Abschnitt aufweist, so dass durch die Bewegung dieses Bodenabschnitts, der beispielsweise als oszillierend drehbewegliche Drehscheibe ausgestaltet ist, die Halterung 1 mitsamt dem Tiegel 8 und insbesondere mitsamt dem Tiegelinhalt hin und her gedreht werden kann, so dass auf diese Weise der Tiegelinhalt gut durchmischt werden kann.

Wenn das Probenmaterial aufgeschmolzen ist und in die Auffangschale 4 abgegossen werden soll, wird die Handhabe 11 angehoben, so dass hierdurch der Tiegel 8 um seine beiden Vorsprünge 9 verschwenkt wird, so dass sich die Ausgießtülle 10 absenkt, wie dies anhand von Fig. 2 dargestellt ist. Der Tiegelinhalt läuft aus der Ausgießtülle 10 und in die Mulde 5 der Auffangschale 4.

Ein Organ zur Betätigung der Handhabe 11 ist nicht im Ofen angeordnet, und daher, ebenso wie der Ofen, in den Zeichnungen nicht dargestellt. Es kann sich bei diesem Betätigungsorgan um eine robuste Konstruktion mit einfacher Kinematik handeln, beispielsweise um einen die Handhabe 11 unterfassenden Balken, der in einer Kreisbogenbewegung angehoben wird, so dass die Handhabe 11 beispielsweise aus ihrer in Fig. 1 dargestellten etwa horizontalen Ausrichtung in ihre in Fig. 2 dargestellte etwa senkrechte Ausrichtung geführt werden kann. Insbesondere kann vorgesehen sein, dass der Balken in den geöffneten Ofen eingeschoben wird, wenn das Probenmaterial aufgeschmolzen ist, so dass dann der im Ofen verbleibende Tiegel 8 gekippt und in die Auffangschale 4 entleert werden kann.

Die Halterung 1 ist lediglich rein beispielhaft dargestellt, um die für Ihre Funktion wesentlichen Bestandteile bzw. Flächen zu erläutern, wie z. B. das zusammen mit dem Tiegel 8 gebildete Kipplager, in welches der Tiegel 8 eingehängt ist, sowie die Aufnahme der Auffangschale 4 in einer definierten Position, welche das zielgerichtete Entleeren des Tiegels bei dessen Kippbewegung sicherstellt. Die vergleichsweise klobige Ausgestaltung der Halterung 1 bewirkt deren vergleichsweise hohes Gewicht, was ein hohes Maß an Standfestigkeit auf z. B. einer Drehscheibe eines Ofens sicherstellt. Abweichend von dem dargestellten Ausführungsbeispiel kann jedoch die Halterung 1 vergleichsweise filigraner ausgestaltet werden, mit einem erheblich geringeren Materialbedarf, so dass das Aufheizen und Abkühlen erheblich verkürzt werden kann.

Weiterhin kann abweichend von dem dargestellten Ausführungsbeispiel die Aufhängung des Tiegels 8, beispielsweise in Form der Ausnehmungen 7, weiter nach außen an einen Rand der Halterung 1 verlagert sein, um möglichst starke Zentrifugalkräfte für das Mischen des Probenmaterials zu nutzen, wenn die Halterung 1 auf einer Drehscheibe oszillierend hin und her gedreht wird.

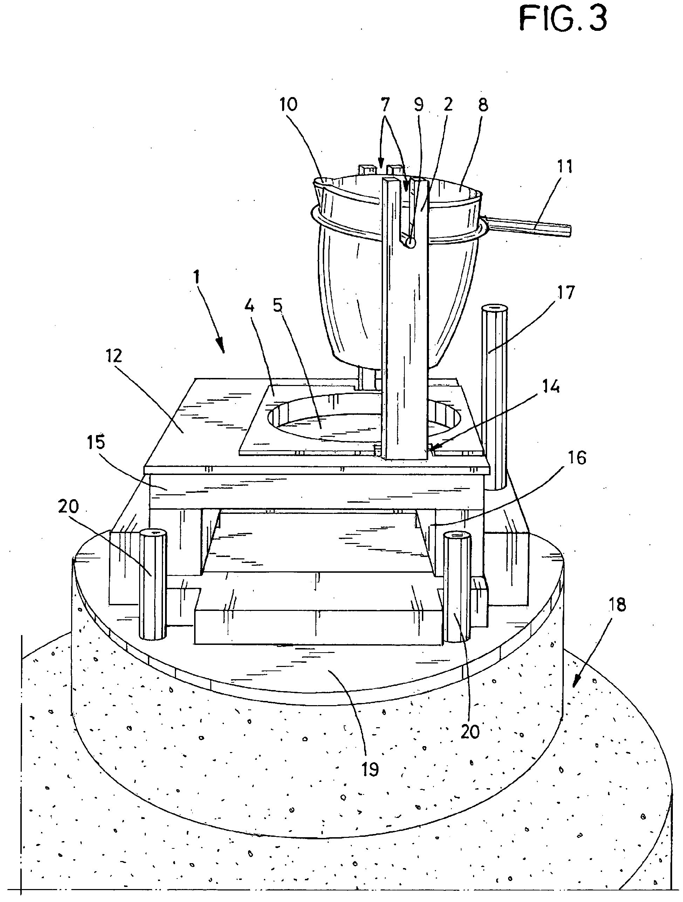

Fig. 3 zeigt ein zweites Ausführungsbeispiel einer Halterung 1 mit einem darin angeordneten Tiegel 8 sowie einer ebenfalls darin angeordneten Auffangschale 4. Die Wangen 2 dieser Halterung 1 bestehen aus Siliziumnitrid, ebenso wie eine Plattform 12, die eine Aussparung aufweist, welche die Mulde 5 der Auffangschale 4 aufnimmt. Die Auffangschale 4 ist zudem mit zwei Einkerbungen 14 versehen, welche U-förmig um die Wangen 2 verlaufen, so dass die Auffangschale 4 an mehreren Stellen formschlüssig in der Halterung 1 gegen horizontale Verschiebungen gesichert ist. Wenn der Tiegel 8 aus den Ausnehmungen 7 der Wangen 2 genommen ist, kann die Auffangschale 4 jedoch problemlos nach oben aus der Halterung herausgeführt werden.

Auch die gesamte Halterung 1 ist gegen Verschiebungen gesichert: eine profilierte Ausgestaltung des Ofenbodens bewirkt einen Formschluss, welcher die Halterung 1 aufnimmt und gegen Verschiebungen in sämtlichen horizontalen Richtungen festlegt. Die Profilierung ist als Baugruppe ausgestaltet, die aus mehreren einzelnen Elementen zusammengesetzt ist, welche aus einer als "Nicrofer" bekannten, handelsüblichen Metall-Legierung bestehen. Sie weist eine gute mechanische Belastbarkeit auch unter hohen Temperaturen auf, so dass die Halterung 1 wiederholt eingesetzt und wieder entnommen werden kann, ohne den Ofenboden unzulässig zu verschleißen. Bei einem Verschleiß der Profilierung selbst kann diese problemlos ausgetauscht werden, da sie mittels entsprechender Kerben formschlüssig zwischen vier aufrechten keramischen Stiften 20 gehalten ist und bei Bedarf nach oben aus diesen herausgezogen und ausgewechselt werden kann.

Der dargestellte Teil des Ofenbodens ist als Drehscheibe 18 ausgestaltet, mit einem gestuften, sich nach oben verjüngenden Kreisquerschnitt. Die Drehscheibe 18 besteht großteils aus einem thermisch hoch belastbaren keramischem Grundmaterial, aus dem auch andere Bereiche der Ofenauskleidung bestehen. Oben auf diesem keramischen Grundmaterial der Drehscheibe 18 ist eine Deckscheibe 19 angeordnet, die aus Siliziumnitrid besteht. Die Deckscheibe 19 bildet eine Schutzschicht, welche das keramische Grundmaterial gegen chemische Belastungen schützt, z. B. gegen Spritzer aus dem Probenmaterial.

Diese Drehscheibe 18 kann in Rotation versetzt werden, und die außermittige Position des Tiegels 8 unterstützt eine möglichst homogene Durchmischung des darin enthaltenen Probenmaterials durch wechselnde Drehrichtungen. In Fig. 3 befindet sich die Drehscheibe 18 in ihrer abgesenkten Position, so dass ein Zugriff auf die Halterung 1 möglich ist. Die Antriebssteuerung, welche die Drehbewegungen der Drehscheibe 18 steuert, ist derart ausgelegt, dass sich die Drehscheibe 18 in einer vorbestimmten Drehwinkelstellung befindet, wenn sie ihre abgesenkte Position erreicht.

Die aus Siliziumnitrid bestehende Plattform 12 der Halterung 1 bildet eine Schutzschicht für darunter angeordnete Stäbe 15 und 16, die ebenfalls aus "Nicrofer" bestehen. Spritzer des Probenmaterial greifen das Siliziumnitrid deutlich weniger stark an als das ohnehin schon vergleichsweise robuste "Nicrofer"-Material. Partikel, die sich aus der Oberfläche der Komponenten herauslösen könnten, welche aus "Nicrofer" bestehen, könnten jedoch die Analyseprobe beeinträchtigen, so dass die keramische Schutzschicht aus Siliziumnitrid vorteilhaft ist. Obere Stäbe 15 verlaufen in einer als "quer" bezeichneten Richtung, und zwei untere Stäbe 16 verlaufen in einer als "längs" bezeichneten Richtung. Statt der oberen Stäbe 15 kann auch eine geschlossene Platte aus dem "Nicrofer"-Material vorgesehen sein. Das im Vergleich zu Siliziumnitrid höhere Raumgewicht des "Nicrofer"-Materials bewirkt einen tiefen Schwerpunkt der Halterung 1 und damit deren Standsicherheit auf der rotierenden Drehscheibe 18.

Zwischen die beiden längs verlaufenden Stäbe 16, die aus mechanisch robusten "Nicrofer"-Material bestehen, kann in horizontaler Richtung ein Element eines Hubwerkzeugs eingefahren werden, z. B. eine Zunge oder eine Gabel, welche die oberen Stäbe 15 unterfasst und die Halterung 1 mitsamt dem Tiegel 8 sowie der Auffangschale 4 anhebt. Da sichergestellt ist, dass sich die Drehscheibe 18 in einer vorbestimmten Drehwinkelstellung befindet, und da sie sich zudem in einer vorbestimmten Höhe befindet, kann das erwähnte Element des Hubwerkzeugs vollautomatisch und behinderungsfrei bewegt und zwischen die unteren, längs verlaufenden Stäbe 16 geführt sowie anschließend angehoben werden.

Bei Anheben der Halterung 1 samt Tiegel 8 und Auffangschale 4 gerät der Tiegel 8 auch aus dem Wirkungsbereich eines Anschlags 17, der bei dem dargestellten Ausführungsbeispiel als aufrechter Stift ausgestaltet ist und eine Kippbewegung des Tiegels 8 verhindert, welche dessen Entleerung bewirken würde.

Sollte der gefüllte Tiegel 8 auf der rotierenden Drehscheibe 18 unter Einwirkung der Fliehkraft eine derartige Kippbewegung auszuführen beginnen, so wird diese Bewegung durch den Anschlag 17 in einem frühen, unkritischen Stadium behindert.

Das erwähnte Hubwerkzeug weist einen Betätiger auf, der sich stiftartig ähnlich wie die erwähnte Zunge oder Gabel erstreckt, z. B. horizontal und parallel zu der Zunge oder Gabel, und der die Handhabe 11 des Tiegels 8 untergreift. Der Betätiger ist Teil einer Kurbel, welche schwenkbeweglich gelagert ist, z. B. um einen Drehpunkt, der etwa auf derselben Achse liegt wie die beiden Vorsprünge 9 des Tiegels 8. Mittels einer aufwärts verlaufenden, kreisbogenförmigen Schwenkbewegung führt der Betätiger die Handhabe 11 nach oben und bewirkt die Entleerung des Tiegels 8 in die Mulde 5 der Auffangschale 4.

## Patentansprüche

1. Anordnung zum Herstellen von Analyseproben einer Röntgenfluoreszenzanalyse,
mit einem als Tischgerät ausgestalteten Ofen, der einen geschlossenen, auf wenigstens 900°C aufheizbaren Innenraum aufweist,
einem in dem Ofen angeordneten, aufzuschmelzendes Probenmaterial aufnehmenden Tiegel (8), welcher ein Fassungsvermögen von einigen cm³ aufweist,
einer in dem Ofen angeordneten, den Tiegel (8) haltenden Halterung (1),
und mit einer unterhalb des Tiegels (8) angeordneten Auffangschale (4), welche zur Aufnahme des im Tiegel (8) befindlichen Probenmaterials bemessen ist,
wobei der Tiegel (8) mischungsbevüeglich im Ofen angeordnet ist, derart, dass das im Tiegel (8) befindliche Probenmaterial mittels der Tiegelbewegungen durchmischbar ist,
und wobei der Tiegel (8) kippbeweglich im Ofen angeordnet ist, derart, dass das im Tiegel (8) befindliche Probenmaterial mittels der Kippbewegung des Tiegels (8) aus dem Tiegel (8) in die Auffangschale (4) füllbar ist,
**dadurch gekennzeichnet,**
**dass** die Halterung (1) unbefestigt in den Ofen eingestellt ist.

2. Anordnung nach Anspruch 1,
**dadurch gekennzeichnet,**
**dass** mehrere Tiegel (8) jeweils in einer eigenen Halterung (1) im Ofen angeordnet sind.

3. Anordnung nach Anspruch 1 oder 2,
**dadurch gekennzeichnet,**
**dass** der Tiegel (8) relativ zur Halterung (1) kippbeweglich in der Halterung (1) gelagert ist.

4. Anordnung nach einem der vorhergehenden Ansprüche,
**dadurch gekennzeichnet,**
**dass** der gesamte Ofen beweglich gelagert ist, derart, dass der im Ofen angeordnete Tiegel (8) mittels der Ofenbewegungen in das Probenmaterial durchmischende Bewegunggen versetzbar ist.

5. Halterung eines Analyseprobentiegels zum Herstellen von Analyseproben einer Röntgenfluoreszenzanalyse für eine nach Anspruch 1 ausgestaltete Anordnung,
**dadurch gekennzeichnet,**
**dass** die Halterung (1) ein den Tiegel (8) aufnehmendes Kipplager aufweist.

6. Halterung nach Anspruch 5,
**dadurch gekennzeichnet,**
**dass** die Halterung (1) einander gegenüberliegende Ausnehmungen (7) zur Aufnahme von tiegelseitigen Vorsprüngen (9) aufweist, derart, dass die Ausnehmungen (7) das Kipplager für einen in diesen Ausnehmungen (7) gehaltenen Tiegel (8) bilden.

7. Halterung nach Anspruch 5 oder 6,
**dadurch gekennzeichnet,**
**dass** die Halterung (1) unterhalb des Tiegels (8) eine Aufnahme für die Auffangschale (4) aufweist, derart, dass die Auffangschale (4) in einer definierten Position unterhalb des Tiegels (8) angeordnet ist.

8. Halterung nach einem der Ansprüche 5 bis 7,
**dadurch gekennzeichnet,**
**dass** das Kipplager möglichst randnah in der Halterung (1) angeordnet ist.

9. Halterung nach einem der Ansprüche 5 bis 8,
**dadurch gekennzeichnet,**
**dass** die Halterung (1) wenigstens teilweise aus einer hochwarmfesten, hoch-kohlenstoffhaltigen Nickel-Chrom-Eisen-Legierung besteht.

10. Halterung einer nach einem der Ansprüche 5 bis 9,
**dadurch gekennzeichnet,**
**dass** die Halterung (1) wenigstens teilweise aus einem keramischen Material besteht.

11. Halterung nach Anspruch 10,
**dadurch gekennzeichnet,**
**dass** die Halterung (1) Siliziumnitrid enthält.

12. Tiegel als Analyseprobentiegel zum Herstellen von Analyseproben einer Röntgenfluoreszenzanalyse für eine nach Anspruch 1 ausgestaltete Anordnung,
**dadurch gekennzeichnet,**
**dass** der Tiegel (8) zwei gegenüberliegende Vorsprünge (9) aufweist, welche eine Kippachse des Tiegels (8) bilden.

13. Tiegel nach Anspruch 12,
**dadurch gekennzeichnet,**
**dass** der Tiegel (8) einen als Handhabe (11) für eine Kippbewegung des Tiegels (8) dienenden Vorsprung aufweist.

14. Tiegel nach Anspruch 13,
**dadurch gekennzeichnet,**
**dass** der Tiegel (8) eine seine Entleerung begünstigende Ausgießtülle (10) aufweist
und die Handhabe (11) der Ausgießtülle (10) gegenüberliegend angeordnet ist.

15. Tiegel nach einem der Ansprüche 12 bis 14,
**dadurch gekennzeichnet,**
**dass** der Tiegel (8) aus einem Platin enthaltenden Werkstoff besteht.

16. Ofen, als Tischofen ausgestaltet, zum Herstellen von Analyseproben einer Röntgenfluoreszenzanalyse für eine nach Anspruch 1 ausgestaltete Anordnung,
**dadurch gekennzeichnet,**
**dass** der Ofen einen Boden aufweist, auf dem die Halterung (1) aufsteht, und dass der die Halterung (1) aufnehmende Bereich des Bodens als oszillierend drehbewegliche Drehscheibe (18) ausgestaltet ist.

17. Ofen nach Anspruch 16,
**dadurch gekennzeichnet,**
**dass** die Drehscheibe zwischen einer nach unten abgesenkten Ladestellung und einer oberen, den Innenraum des Ofens begrenzenden Betriebsstellung beweglich ist, wobei die Drehscheibe aus ihrer Betriebsstellung um ein die Entnahme des Tiegels (8) aus der Halterung (1) ermöglichendes Maß in die Ladestellung absenkbar ist.

18. Ofen nach Anspruch 17,
**dadurch gekennzeichnet,**
**dass** die Drehscheibe um ein die Entnahme der Halterung (1) von der Drehscheibe ermöglichendes Maß in die Ladestellung absenkbar ist.

19. Ofen nach einem der Ansprüche 16 bis 18,
**dadurch gekennzeichnet,**
**dass** die Drehscheibe (18) eine Profilierung aufweist, welche an die Halterung (1) angepasst ist, derart, dass die auf der Drehscheibe (18) aufstehende Halterung (1) formschlüssig gegen Verschiebungen gesichert ist.

20. Ofen nach einem der Ansprüche 16 bis 19,
**dadurch gekennzeichnet,**
**dass** die Drehscheibe (18) einen die Schwenkbeweglichkeit des Tiegels (8) innerhalb der Halterung (1) begrenzenden Anschlag (17) aufweist.

21. Auffangschale (4) zum Auffangen geschmolzenen Probenmaterials einer nach Anspruch 1 ausgestalteten Anordnung zum Herstellen von Analyseproben einer Röntgenfauoreszenzanalyse,
**dadurch gekennzeichnet,**
**dass** die Auffangschale (4) entlang ihrer umlaufenden Umrandung eine Aussparung und / oder einen Vorsprung aufweist,
derart, dass in Anpassung an die Formgebung der den Tiegel (8) haltenden Halterung (1) ein Formschluss zwischen der Auffangschale (4) und der Halterung (1) erzeugt wird, welcher die Auffangschale (4) gegen Verschiebungen in horizontalen Richtungen sichert.

22. Auffangschale nach Anspruch 21
**dadurch gekennzeichnet,**
**dass** die Auffangschale (4) entlang ihrer umlaufenden Umrandung zwei Einkerbungen aufweist.

23. Verfahren zum Herstellen von Analyseproben einer Röntgenfluoreszenzanalyse,
wobei aufzuschmelzendes Probenmaterial in einen Tiegel (8) gegeben wird, welcher ein Fassungsvermögen von einigen cm³ aufweist,
wobei der Tiegel (8) innerhalb eines Ofens in einer Halterung (1) gehalten wird,
das Probenmaterial innerhalb des Ofens auf wenigstens 900°C aufgeheizt wird, derart, dass das Probenmaterial schmilzt,
und wobei der Tiegel (8) mischungsbeweglich im Ofen angeordnet ist und das im Tiegel (8) befindliche Probenmaterial mittels der Tiegelbewegungen durchmischt wird, und wobei das aufgeschmolzene Probenmaterial in eine unterhalb des Tiegels (8) angeordnete Auffangschale (4) abgegossen wird, indem der Tiegel gekippt wird, wobei der Tiegel (8) vor Beginn des Schmelzvorgangs außerhalb des Ofens mit dem aufzuschmelzenden Probenmaterial befüllt wird,
wobei sich auch die Halterung (1), die als ein vom Ofen separates Bauteil ausgestaltet ist, vor Beginn des Schmelzvorgangs außerhalb des Ofens befindet,
die Halterung (1) vor Beginn des Schmelzvorgangs außerhalb des Ofens mit dem Tiegel (8) bestückt wird,
und mitsamt dem Tiegel (8) in den Ofen gestellt wird, wo sie während des Schmelzvorgangs unbefestigt einigestellt verbleibt.

24. Verfahren nach Anspruch 23,
**dadurch gekennzeichnet,**
**dass** die Halterung (1) mitsamt dem Tiegel (8) nach Beendigung des Schmelzvorgangs aus dem Ofen entnommen wird,
mit einem neuen Tiegel (8) bestückt wird,
und für einen neuen Schmelzvorgang erneut, mitsamt dem neuen Tiegel (8), in den Ofen gestellt wird.

25. Verfahren nach Anspruch 23 oder 24,
**dadurch gekennzeichnet,**
**dass** eine erste Halterung (1) vor Beginn eines ersten Schmelzvorgangs außerhalb des Ofens mit einem ersten Tiegel (8) bestückt wird,
mitsamt dem ersten Tiegel (8) in den Ofen gestellt wird, und mitsamt dem ersten Tiegel (8) nach Beendigung des Schmelzvorgangs aus dem Ofen entnommen wird, und dass vor der Entnahme der ersten Halterung (1) aus dem Ofen eine zweite Halterung (1) vorbereitet wird, indem diese mit einem zweiten Tiegel (8) bestückt wird, welcher ebenfalls aufzuschmelzendes Probenmaterial enthält,
und **dass** nach der Entnahme der ersten Halterung (1) aus dem Ofen die vorbereitete zweite und bereits mit dem zweiten Tiegel (8) bestückte Halterung (1) in den Ofen gestellt wird.

## Claims

1. Arrangement for producing samples for an X-ray fluorescence analysis, having a furnace that is constructed as a desk-top unit and incorporates a sealed interior space that can be heated up to at least 900 °C,
and having a pot (8) that is disposed in the furnace and that has a holding capacity of some cm³ and that can receive the sample material to be melted,
a support stand (1) that is disposed in the furnace to hold the pot (8),
and having a collecting pan (4) that is disposed underneath the pot (8) and that is dimensioned to receive the sample material held in the pot (8),
where the pot (8) is disposed mix-movably in the furnace so that the sample material held in the pot (8) can be thoroughly mixed by the movements of the pot,
and where the pot (8) is tiltably disposed in the furnace so that the sample material held in the pot (8) can be filled into the collecting pan (4) from the pot (8) through the tilting movement of the pot (8),
**characterised in**
**that** the support stand (1) is placed in the furnace unfastened.

2. Arrangement in accordance with claim 1,
**characterised in**
**that** a number of pots (8) are disposed in the furnace each in its own support stand (1).

3. Arrangement in accordance with claim 1 or 2,
**characterised in**
**that** the pot (8) is mounted in the support stand (1) so as to be able to tilt relative to the support stand (1).

4. Arrangement in accordance with any one of the foregoing claims,
**characterised in**
**that** the whole furnace is moveably mounted so that the pot (8) disposed in the furnace can be set moving by the movements of the furnace and so thoroughly mix the sample material.

5. Support stand for an analysis sample pot for the production of samples for X-ray fluorescence analysis for an arrangement of the kind described in claim 1,
**characterised in**
**that** the support stand (1) incorporates a tilting bearing to receive the pot (8).

6. Support stand in accordance with claim 5,
**characterised in**
**that** the support stand (1) incorporates opposing recesses (7) to receive projecting members (9) on the pot (8) so that the recesses (7) form the tilting bearing for a pot (8) held in these recesses (7).

7. Support stand in accordance with claim 5 or 6,
**characterised in**
**that** the support stand (1) underneath the pot (8) incorporates a seating for the collecting pan (4) so that the collecting pan (4) is disposed in a specified position underneath the pot (8).

8. Support stand in accordance with any one of claims 5 to 7,
**characterised in**
**that** the tilting bearing is disposed as close to the edge in the support stand (1) as possible.

9. Support stand in accordance with any one of claims 5 to 8,
**characterised in**
**that** the support stand (1) is made at least partly of a highly heatproof, highly carbonaceous nickel-chrome-iron alloy.

10. Support stand in accordance with any one of claims 5 to 9,
**characterised in**
**that** the support stand (1) is made at least partly of a ceramic materal.

11. Support stand in accordance with claim 10,
**characterised in**
**that** the support stand (1) contains silicon nitride.

12. Pot as an analysis sample pot for the production of samples for X-ray fluorescence analysis for an arrangement of the kind set out in claim 1,
**characterised in**
**that** the pot (8) incorporates two opposing projecting members (9) that form a tilting axis for the pot (8).

13. Pot in accordance with claim 12,
**characterised in**
**that** the pot (8) incorporates a projecting member serving as a handle (11) for tilting the pot (8) with,

14. Pot in accordance with claim 13,
**characterised in**
**that** the pot (8) incorporates a pouring spout (10) to assist emptying and the handle (11) is disposed opposite the pouring spout (10).

15. Pot in accordance with any one of claims 12 to 14,
**characterised in**
**that** the pot (8) is made from a material containing platinum.

16. Furnace designed as a table-top furnace for the production of samples for X-ray fluorescence analysis for an arrangement of the kind set out in claim 1,
**characterised in**
**that** the furnace incorporates a base on which the support stand (1) is mounted and that the portion of the base receiving the support stand (1) is designed as an oscillatingly rotatable turntable (18).

17. Furnace in accordance with claim 16,
**characterised in**
**that** the turntable can be moved between a lowered loading position and an upper operating position delimiting the interior space of the furnace, where the turntable can be lowered from its operating position into the loading position by an amount enabling the pot (8) to be removed from the support stand (1).

18. Furnace in accordance with claim 17,
**characterised in**
**that** the turntable can be lowered into the loading position by an amount enabling the support stand (1) to be removed from the turntable.

19. Furnace in accordance with any one of claims 16 to 18,
**characterised in**
**that** the turntable (18) incorporates a shaped portion that is made to engage with the support stand (1) tightly so that the support stand mounted on the turntable (18) is secured positively against displacement.

20. Furnace in accordance with any one of claims 16 to 19,
**characterised in**
**that** the turntable (18) incorporates a stop (17) that limits the pivoting movement of the pot (8) inside the support stand (1).

21. Collecting pan (4) for receiving molten sample material from an arrangement designed in accordance with claim 1 for the production of samples from an X-ray fluorescence analysis,
**characterised in**
**that** the collecting pan (4) incorporates around its circumference a recess and/or a projecting portion so that a positive fit adapted to the shape of the support stand (1) that receives the pot (8) is generated so as to secure the collecting pan (4) against displacement in a horizontal direction.

22. Collecting pan in accordance with claim 21
**characterised in**
**that** the collecting pan (4) incorporates two grooves running around its circumference.

23. Method of producing samples for an X-ray fluorescence analysis,
where sample material to be melted is put into a pot (8) having a holding capacity of some cm³,
where the pot (8) is held in a support stand (1) inside a furnace,
the sample material is heated inside the furnace to at least 900°C so that the sample material melts,
and where the pot (8) is disposed in the furnace so that it can be mixed by movement and the sample material held in the pot (8) is thoroughly mixed through the movements of the pot and where by tilting the pot the molten sample material is poured off into a collecting pan (4) disposed underneath the pot (8), where, before the melting operation begins, the pot (8) is filled outside the furnace with the sample material to be melted,
where the support stand (1), which is designed as a component part separate from the furnace, is also disposed outside the furnace and before the melting operation begins the pot (8) is fitted onto the support stand (1) outside the furnace and placed together with the pot (8) into the furnace, where it remains unfastened during the melting operation.

24. Method in accordance with claim 23,
**characterised in**
**that**, after the melting operation is completed, the support stand (1) is removed from the furnace together with the pot (8) and a fresh pot (8) is fitted onto the support stand (1) and the support stand (1) together with the fresh pot (8) is placed into the furnace ready for a new melting operation.

25. Method in accordance with claim 23 or 24,
**characterised in**
**that**, before a first melting operation begins, a first support stand (1) is fitted with a first pot (8) outside the furnace and together with the first pot (8) placed into the furnace and is after the melting operation removed from the furnace with the first pot (8) and that, before the first support stand (1) is removed from the furnace, a second support stand (1) is prepared by fitting onto it a second pot (8) that likewise contains sample material to be melted and that, after the first support stand (1) has been removed from the furnace, the prepared second support stand (1), which has already been fitted with the second pot (8), is placed into the furnace.

## Revendications

1. Agencement permettant de préparer des éprouvettes pour analyse par fluorescence X, comprenant un four configuré comme appareil sur table présentant un compartiment intérieur fermé chauffant au minimum à 900 °C,
un creuset (8) logé dans le four et recevant le matériau éprouvette à fondre, creuset dont la contenance est de quelques cm³.
une fixation (1) agencée dans le four et retenant le creuset (8),
et une coupelle (4) d'interception agencée en-dessous du creuset (8), dimensionnée pour recevoir le matériau éprouvette présent dans le creuset (8),
sachant que le creuset (8) est agencé mobile dans le four de façon à mouvoir le mélange, de sorte que le matériau éprouvette présent dans le creuset (8) est mélangé de façon homogène via les mouvements du creuset,
et sachant que le creuset (8) est agencé basculant dans le four, de sorte que le matériau éprouvette présent dans le creuset (8) peut être transvasé, par un basculement du creuset (8), de ce dernier (8) vers la coupelle d'interception (4), **caractérisé en ce que**
la fixation (1) est réglée non fixée dans le four.

2. Agencement selon la revendication 1,
**caractérisé en ce que**
plusieurs creusets (8) sont agencés dans leur propre fixation (1) dans le four.

3. Agencement selon la revendication 1 ou 2,
**caractérisé en ce que**
le creuset (8) est, relativement à la fixation (1), en appui basculant dans la fixation (1).

4. Agencement selon l'une des revendications précédentes,
**caractérisé en ce que**
**en ce que** l'ensemble du four est en appui mobile, de sorte que le creuset (8) agencé dans le four est déplaçable au moyen des mouvements du four et que ces mouvements mélangent le matériau éprouvette de façon homogène.

5. Fixation d'un creuset à échantillon d'analyse pour confectionner des échantillons destinés à l'analyse par fluorescence X pour un agencement configuré selon la revendication 1,
**caractérisée en ce que**
la fixation (1) présente un palier basculant recevant le creuset (8).

6. Fixation selon la revendication 5,
**caractérisée en ce que**
la fixation (1) présente des évidements (7) se faisant face, servant à recevoir des saillies (9) situées du côté du creuset, de sorte que les évidements (7) forment le palier basculant d'un creuset (8) retenu dans ces évidements (7).

7. Fixation selon la revendication 5 ou 6,
**caractérisée en ce que**
**en ce que** la fixation (1) en-dessous du creuset (8) présente un réceptacle pour la coupelle d'interception (4), de sorte que la coupelle d'interception (4) est agencée sur une position définie en-dessous du creuset (8).

8. Fixation selon l'une des revendications 5 à 7,
**caractérisée en ce que**
le palier basculant est agencé le plus près possible du bord dans la fixation (1).

9. Fixation selon l'une des revendications 5 à 8,
**caractérisée en ce que**
la fixation (1) se compose au moins en partie d'un alliage nickel chrome et fer hautement réfractaire et à haute teneur en carbone.

10. Fixation selon l'une des revendications 5 à 9,
**caractérisée en ce que**
la fixation (1) se compose au moins en partie d'un matériau céramique.

11. Fixation selon la revendication 10,
**caractérisée en ce que**
la fixation (1) contient du nitrure de silicium.

12. Creuset en tant que creuset pour échantillons d'analyse, destiné à confectionner des échantillons d'analyse par fluorescence X, pour un agencement configuré selon la revendication 1,
**caractérisé en ce que**
le creuset (8) présente deux saillies (9) se faisant face et formant un axe de basculement du creuset (8).

13. Creuset selon la revendication 12,
**caractérisé en ce que**
le creuset (8) présente une saillie officiant de poignée (11) pour imprimer un mouvement basculant au creuset (8),

14. Creuset selon la revendication 13,
**caractérisé en ce que**
le creuset (8) présente une gaine de coulée (10) favorisant sa vidange et que la poignée (11) de la gaine de coulée (10) est agencée en face.

15. Creuset selon l'une des revendications 12 à 14,
**caractérisé en ce que**
le creuset (8) est en un matériau contenant du platine.

16. Four configuré en four sur table pour confectionner des échantillons d'analyse par fluorescence X, pour un agencement configuré selon la revendication 1, **caractérisé en ce que**
le four présente un fond sur lequel la fixation (1) repose verticalement, et **en ce que** la zone du fond recevant la fixation (1) est configurée sous forme de plaque tournante (18) et oscillante.

17. Four selon la revendication 16,
**caractérisée en ce que**
la plaque tournante est déplaçable entre une position de chargement abaissée et une position de service supérieure délimitant le compartiment intérieur du four, sachant que la plaque tournante peut être abaissée de sa position de service d'un quantum permettant de retirer le creuset (8) de la fixation (1) pour l'abaisser jusqu'en position de chargement.

18. Four selon la revendication 17,
**caractérisé en ce que**
la plaque tournante peut être abaissée d'un quantum permettant de retirer la fixation (1) de la plaque tournante pour l'amener jusqu'en position de chargement.

19. Four selon l'une des revendications 16 à 18,
**caractérisé en ce que**
la plaque tournante (18) présente un profil adapté à la fixation (1), de sorte que la fixation (1) debout sur la plaque tournante (18) est sécurisée par adhérence des formes contre les déplacements.

20. Four selon l'une des revendications 16 à 19,
**caractérisé en ce que**
la plaque tournante (18) présente une butée (17) limitant le mouvement de basculement du creuset (8) à l'intérieur de la fixation (1).

21. Coupelle (4) servant à intercepter le matériau éprouvette fondu dans un agencement configuré selon la revendication 1, destiné à confectionner des échantillons d'analyse par fluorescence X,
**caractérisée en ce que**
la coupelle d'interception (4) présente le long de son bord périphérique un évidement et/ou une saillie de sorte que pour s'adapter à la géométrie de la fixation (1) retenant le creuset (8), une adhérence de formes est générée entre la coupelle d'interception (4) et la fixation (1), laquelle adhérence sécurise la coupelle d'interception (4) contre les déplacements dans des directions horizontales.

22. Coupelle d'interception selon revendication 21
**caractérisée en ce que**
la coupelle d'interception (4) présente deux entailles le long de son rebord périphérique.

23. Procédé pour la fabrication d'échantillons d'analyse par fluorescence X,
sachant que du matériau éprouvette à faire fondre est versé dans un creuset (8) présentant une contenance de quelques cm³,
sachant que le creuset (8) à l'intérieur d'un four est maintenu dans une fixation (1),
que le matériau éprouvette est échauffé dans un four à au moins 900 °C de sorte que le matériau d'échantillon fonde,
et sachant que le creuset (8) est agencé de façon à déplacer le mélange dans le four, et que le matériau présent dans le creuset (8) est mélangé de façon homogène au moyen des mouvements du creuset, et sachant que le matériau éprouvette fondu est coulé dans une coupelle d'interception (4) située en dessous du creuset (8) en faisant basculer le creuset, sachant que le creuset (8) est rempli de matériau éprouvette hors du four, avant de commencer l'opération de fusion.
sachant que la fixation (1), qui est configurée comme composant séparé du four, se trouve également hors du four avant le début de l'opération de fusion, que la fixation (1) est garnie du creuset (8) hors du four avant le début de l'opération de fusion, puis est introduite avec le creuset (8) dans le four où elle reste réglée non fixée pendant l'opération de fusion.

24. Procédé selon la revendication 23,
**caractérisé en ce que**
la fixation (1) garnie du creuset (8) est retirée du four après la fin de l'opération de fusion, qu'elle est garnie d'un nouveau creuset (8) et qu'elle est à nouveau introduite dans le four avec le nouveau creuset (8) en vue d'une nouvelle opération de fusion.

25. Procédé selon la revendication 23 ou 24,
**caractérisé en ce qu'**
une première fixation (1) est équipée d'un premier creuset (8) hors du four avant le début d'une première opération de fusion, qu'elle est introduite avec le premier creuset (8) dans le four et qu'elle en est retirée avec le premier creuset (8) après l'achèvement de l'opération de fusion, et **en ce qu'**avant de prélever la première fixation (1) hors du four une seconde fixation (1) est préparée en garnissant cette dernière d'un second creuset (8) contenant lui aussi du matériau éprouvette à faire fondre, et **en ce qu'**après avoir retiré la première fixation (1) du four la deuxième fixation (1) préparée et déjà garnie du deuxième creuset (8) est introduite dans le four.
